# EUROPÄISCHE PATENTSCHRIFT

(11) **EP 2 865 909 B1**
(45) Veröffentlichungstag und Bekanntmachung des Hinweises auf die Patenterteilung: **10.11.2021**
(21) Anmeldenummer: 14185507.2
(22) Anmeldetag: 19.09.2014
(51) Int. Cl.: F16C 33/44

(54) **WÄLZLAGERKÄFIG ODER -SEGMENT UND VERFAHREN ZUM HERSTELLEN EINES WÄLZLAGERKÄFIGS ODER -SEGMENTS**
ROLLER BEARING CAGE OR SEGMENT AND METHOD FOR MANUFACTURING A ROLLER BEARING CAGE OR SEGMENT
CAGE OU SEGMENT DE PALIER DE ROULEMENT ET PROCÉDÉ DESTINÉ À LA FABRICATION D'UNE CAGE OU D'UN SEGMENT DE PALIER DE ROULEMENT

(30) Priorität: 20.09.2013 DE 102013218975; 07.02.2014 DE 102014202268
(43) Veröffentlichungstag der Anmeldung: 29.04.2015
(73) Patentinhaber: Aktiebolaget SKF, 415 50 Göteborg (SE)
(72) Erfinder: Krause, Thomas, 97506 Grafenrheinfeld (DE)
(74) Vertreter: Kuhstrebe, Jochen

(56) Entgegenhaltungen:
- EP-A1- 1 775 488
- DD-A1- 120 912
- DE-A1- 10 129 372
- DE-A1-102009 034 827
- JP-A- 2007 292 257
- JP-A- 2008 249 105
- US-A- 4 243 276
- US-B1- 7 846 506
- Ntn: "Deep Groove Ball Bearings", Ball and Roller Bearings - CAT. NO. 2202-IX/E, 1 January 2009 (2009-01-01), page 1,3,B-8, XP055352404, US Retrieved from the Internet: URL:http://www.ntnamericas.com/en/website/ documents/brochures-and-literature/catalog s/ntn_2202-ixe.pdf [retrieved on 2017-03-07]

## Beschreibung

Ausführungsbeispiele beziehen sich auf einen Wälzlagerkäfig oder ein Wälzlagerkäfigsegment und ein Verfahren zur Herstellung eines Wälzlagerkäfigs oder eines Wälzlagerkäfigsegments.

Wälzlagerkäfige können aus einer Vielzahl von Materialien hergestellt sein. Konventionelle Wälzlagerkäfige aus Kunststoff werden oft in einem Spritzgussverfahren hergestellt. Viele Kunststoffe können allgemein eine schlechte Wärmeleitfähigkeit aufweisen. Deshalb können bei manchen konventionellen Wälzlagerkäfigen aus Kunststoff sehr lange Abkühlzeiten in einem Spritzgusswerkzeug auftreten. Dadurch können sich die Zykluszeiten bei der Herstellung verlängern. Dieser Effekt kann sich beispielsweise mit einer zunehmenden Wanddicke des Bauteils verstärken.

EP 1 775 488 A1 lehrt einen Halter für ein Wälzlager, der für eine Nahrungsmittelmaschine oder eine Vakuumvorrichtung verwendet wird, der eine erhöhte Menge eines Schmieröls enthält und eine Verwendungseffizienz des Schmieröls und des Wälzlagers verbessert.

US 7 846 506 B1 lehrt ein Verfahren zum Aufbringen einer tribologischen Beschichtung auf ein Kohlenstoffverbundsubstrat.

JP 2008 249105 A lehrt ein Kegelrollenlager, das durch einen Innenring, einen Außenring, mehrere Rollen und einen Halter zum Halten mehrerer Rollen in einem gleichen Abstand in Umfangsrichtung aufgebaut ist.

Ntn (NTN cooperation), Ball and Roller Bearings - CAT. NO. 2202-IX/E, 1. Januar 2009, lehrt Rillenkugellager.

US 4 243 276 A offenbart einen Wälzlagerkäfig mit den Merkmalen des Oberbegriffs des Anspruchs 1.

Es besteht also ein Bedarf daran, ein Konzept für einen Wälzlagerkäfig bereitzustellen, bei dem ein Kompromiss aus Stabilität und Abkühlzeit verbessert werden kann. Diesem Bedarf tragen ein Wälzlagerkäfig oder -segment sowie ein Verfahren zum Herstellen eines Wälzlagerkäfigs oder -segments nach den unabhängigen Ansprüchen Rechnung.

Ausführungsbeispiele betreffen einen Wälzlagerkäfig oder -segment. Der Wälzlagerkäfig oder das -segment besteht zumindest teilweise aus einem Kunststoff. Der Kunststoff weist zumindest abschnittsweise eine Schaumstruktur auf.

Dadurch, dass der Wälzlagerkäfig zumindest abschnittsweise eine Schaumstruktur aufweist, kann bei manchen Ausführungsbeispielen ein schnelleres Abkühlen ermöglicht werden. Dies kann beispielsweise möglich sein, weil die Schaumstruktur nicht kompakt aus Kunststoff ausgebildet ist. Der Wälzlagerkäfig kann also im Vergleich zu einem Wälzlagerkäfig gleicher Größe, der massiv ausgebildet ist und keine Schaumstruktur aufweist, aus weniger Material bestehen. Trotzdem könnte der Wälzlagerkäfig durch die Schaumstruktur eine ausreichende Stabilität erhalten.

Ein Wälzlagerkäfig kann jedwedes Bauteil sein, das sich zum Führen von Wälzkörpern in einem Wälzlager eignet. Ein Wälzlagerkäfig kann zumindest ein Wälzlagerkäfigsegment umfassen. Die auf einen Wälzlagerkäfig gerichteten Ausführungsbeispiele können auch auf Ausführungsbeispiele eines Wälzlagerkäfigsegments übertragen werden. Zum Beispiel kann der Wälzlagerkäfig als Massivkäfig, Kammdeckelkäfig, Fensterkäfig, Doppelkammkäfig, Schnappkäfig oder dergleichen ausgebildet sein. Der Wälzlagerkäfig oder das - segment kann sich ggf. zum Führen von allen möglichen Wälzkörpern eignen, wie z.B. eine Nadelrolle, eine Zylinderrolle, eine Kegelrolle, eine Kugel, eine Pendelrolle oder dergleichen.

Eine Schaumstruktur kann sich dadurch auszeichnen, dass sie nicht massiv ist und z.B. als eine zellförmige Struktur aufgebaut ist. Beispielsweise kann die Schaumstruktur eine Mehrzahl von Zellen oder Poren aufweisen. Die Zellen können ggf. durch Zellwände begrenzt sein. Dabei können die Zellwände aus einem Feststoff oder einer Flüssigkeit bestehen. Die Zellwände können jeweils eine geringe Wandstärke aufweisen. Dadurch kann der Wälzlagerkäfig eine Vielzahl dünner Wände aufweisen. Diese könnten schneller abkühlen, als ein massiver Wälzlagerkäfig mit gleicher Ausdehnung. Eine Gesamtwandstärke der dünnen Wände bzw. der Zellwände kann damit ebenfalls geringer sein als die entsprechende Wandstärke des massiven Wälzlagerkäfigs. Die Wandstärke des massiven Käfigs ist dabei eine Ausdehnung des Käfigs, die mit Werkstoff gefüllt ist bzw. ein Abstand zwischen zwei gegenüberliegenden Oberflächen des Käfigs. Bei manchen Ausführungsbeispielen kann die Flüssigkeit aushärten und/oder trocknen. Der Feststoff oder die Flüssigkeit kann beispielsweise ein Kunststoff sein. Der Hohlraum der Zellen kann in manchen Fällen mit einem Gas gefüllt sein. Mögliche Gase, die sich in dem Hohlraum befinden können, sind z.B. Luft, Sauerstoff, Stickstoff, Kohlendioxid oder dergleichen. Die Schaumstruktur kann als offenzellige Schaumstruktur ausgebildet sein. Bei einer offenzelligen Schaumstruktur können die Zellwände beispielsweise offen, also nicht geschlossen, sein. Die Schaumstruktur kann auch als geschlossenzellige Schaumstruktur ausgebildet sein. Bei einer geschlossenzelligen Schaumstruktur können die Zellwände zwischen den einzelnen Zellen vollständig geschlossen ausgebildet sein. Die Schaumstruktur kann beispielsweise auch eine Kombination aus geschlossenen und offenen Zellen aufweisen. Unter Umständen kann die Schaumstruktur insgesamt eine niedrigere Dichte aufweisen, als der Festkörper oder die Flüssigkeit der bzw. die die Zellbegrenzung der Schaumstruktur bildet. Dies ist von dem Dichteverhältnis des für die Zellwände und Hohlräume verwendeten Materials abhängig.

Der Kunststoff wird daher ein Volumen aufweisen, das aufgrund der nicht mit dem Kunststoff ausgefüllten Bereiche bzw. Zellen geringer ist als ein Gesamtvolumen des Wälzlagerkäfigs. Ein Volumen des Kunststoffs kann dabei einen Anteil des Gesamtvolumens des Wälzlagerkäfigs ausmachen, der in einem Wertebereich liegt, dessen Anfangs- und/oder der Endwert können 50%, 60%, 70%, 80%, 85%, 90% und/oder 95% betragen können. Dadurch kann eine Dichte des Wälzlagerkäfigs bei manchen Ausführungsbeispielen angepasst und geringer sein als die Dichte eines massiv ausgebildeten Wälzlagerkäfigs. Bei manchen Ausführungsbeispielen kann durch die Schaumstruktur Material eingespart werden. Eine Gesamtwandstärke des Bauteils kann reduziert sein, weil das Material durch die Zellen oder Poren durchbrochen ist. Trotzdem kann der Wälzlagekäfig bzw. das Bauteil gleiche Abmessungen bzw. Oberflächenmaße wie ein massiver Wälzlagerkäfig aufweisen. So kann bei manchen Ausführungsbeispielen ein Materialverbrauch bzw. ein Materialeinsatz zur Herstellung des Wälzlagerkäfigs gegenüber einer massiven Variante reduziert sein.

Erfindungsgemäß ist der Kunststoff ein Thermoplast. Dadurch eignet sich der Wälzlagerkäfig zur Herstellung in einem Spritzgießverfahren.

Ferner kann der Kunststoff zumindest einen Füllstoff umfassen. So können bei manchen Ausführungsbeispielen die Eigenschaften des Kunststoffs verändert oder sogar verbessert werden. Beispielsweise kann der Füllstoff ein Fasermaterial sein. Beispiele für einen Füllstoff sind Glas- oder Carbonfasern.

Die Schaumstruktur bildet einen Kern des Wälzlagerkäfigs aus. Der Kern ist von einer kompakten und massiven Außenhaut umgeben. Bei manchen Ausführungsbeispielen befindet sich die Schaumstruktur in einem spannungsneutralen Bereich des Wälzlagerkäfigs. Dies könnte beispielsweise der Fall sein, wenn der Wälzlagerkäfig auf Biegung beansprucht wird. Mit anderen Worten ausgedrückt, kann bei manchen Ausführungsbeispielen in einem spannungsneutralen Kern des Wälzlagerkäfigs der Kunststoff durch die Schaumstruktur reduziert sein. Dadurch, dass der Wälzlagerkäfig eine kompakte oder glatte Außenhaut aufweist, kann bei manchen Ausführungsbeispielen eine geringe Reibung zwischen einem Schmiermittel und dem Wälzlagerkäfig bewirkt werden. Die Verteilung von Schaumstruktur und kompakter Außenhaut kann sich bei manchen Ausführungsbeispielen bedingt durch das Herstellungsverfahren automatisch ergeben. Ergänzend oder alternativ kann die Schaumstruktur auch mit einem Material, das die kompakte Außenhaut ausbildet, nachträglich überzogen bzw. beschichtet sein.

Bei einigen weiteren Ausführungsbeispielen besteht der Wälzlagerkäfig vollständig aus der Schaumstruktur. Dadurch kann bei manchen Ausführungsbeispielen ein Wälzlagerkäfig mit einer besonders geringen Dichte bereitgestellt werden. Der Wälzlagerkäfig weist eine Kombination aus der Schaumstruktur und einer massiven Kunststoffstruktur bzw. eine Massivstruktur auf. Die Außenhaut ist Teil einer solchen Massivstruktur. Die Massivstruktur dient auch als Skelet des Wälzköperkäfigs. Die Massivstruktur kann ggf. auch Poren oder Zellen aufweisen. Die Massivstruktur weist eine höhere Dichte als die Schaumstruktur auf. Die Massivstruktur kann aus dem gleichen Kunststoff wie die Schaumstruktur gebildet sein. Beispielsweise können sich auch an einer Oberfläche des Wälzlagerkäfigs Poren oder eine Schaumstruktur befinden. Dies kann ggf. bei Ausführungsbeispielen der Fall sein, bei denen sich herstellungsbedingt ein Auftreten von Poren an der Oberfläche nicht verhindern lässt.

Bei einigen Ausführungsbeispielen weist die Schaumstruktur Poren bzw. Zellen mit einem Durchmesser auf, in einem Wertebereich von 0,1 mm, 0,2 mm, 0,3 mm, 0,4 mm, 0,5 mm, 0,6 mm, 0,7 mm, 0,8 mm, 0,9 mm bis 1 mm. So kann bei manchen Ausführungsbeispielen eine ausreichend leichte Struktur bei einer ausreichenden Festigkeit bereitgestellt werden.

Bei einigen weiteren Ausführungsbeispielen weist der Wälzlagerkäfig eine Wandstärke zwischen 4 mm und 20 mm auf. So kann bewirkt werden, dass die kompakte Außenhaut ausreichend dick sein kann und, dass ausreichend Raum zum Ausbilden der Schaumstruktur vorhanden ist.

Bei einigen weiteren Ausführungsbeispielen ist der Wälzlagerkäfig einstückig ausgebildet. So kann bei manchen Ausführungsbeispielen beispielsweise eine Anzahl von Bauteilen für ein Wälzlager reduziert sein.

Bei einigen weiteren Ausführungsbeispielen ist der Wälzlagerkäfig mehrstückig ausgebildet. Beispielsweise kann der Wälzlagerkäfig eine Mehrzahl von Wälzlagerkäfigsegmenten umfassen. So kann bei manchen Ausführungsbeispielen eine Montage des Wälzlagerkäfigs, beispielsweise wenn der Innenring einen Bord aufweist, vereinfacht sein.

Ausführungsbeispiele betreffen ferner ein Verfahren. Mit dem Verfahren kann ein Wälzlagerkäfig oder -segment hergestellt werden. Bei dem Verfahren wird eine Kunststoffschmelze in eine Form eingebracht und die Kunststoffschmelze wird zumindest teilweise geschäumt. Dadurch, dass die Kunststoffschmelze zumindest teilweise geschäumt wird, kann ein Wälzlagerkäfig hergestellt werden, der zumindest abschnittsweise eine Schaumstruktur aufweist. Bei manchen Ausführungsbeispielen kann ein Wälzlagerkäfig hergestellt werden, der weniger Material umfasst als ein konventioneller massiver Wälzlagerkäfig vergleichbarer Größe. Ferner besteht die Möglichkeit, eine Gefahr einer Lunkerbildung zumindest zu reduzieren. So könnte beispielsweise auch das Auftreten von Einfallstellen oder eine Verzugsneigung des Käfigs abnehmen. Die Verfahrensschritte können gemäß manchen Ausführungsbeispielen nacheinander, gleichzeitig, teilweise überlappen und/oder in unterschiedlicher Reihenfolge durchgeführt werden.

Bei einigen Ausführungsbeispielen erfolgt das Schäumen chemisch. Dazu wird ein Treibmittel eingesetzt. So kann bei manchen Ausführungsbeispielen ermöglicht werden, dass das Treibmittel bereits einem Kunststoffgranulat zugemischt sein kann. Es könnte beispielsweise darauf verzichtet werden, ein Leitungssystem vorzusehen, um ein Gas zum Schäumen der Kunststoffschmelze einzuleiten. Das Treibmittel kann beispielsweise als Feststoff vorliegen.

Bei einigen weiteren Ausführungsbeispielen erfolgt das Schäumen physikalisch. Dazu wird der Kunststoffschmelze ein Gas zugemischt. Das Zumischen erfolgt unter Druck. So kann bei manchen Ausführungsbeispielen ermöglicht werden, dass auf ein chemisches Treibmittel verzichtet werden kann.

Weitere vorteilhafte Ausgestaltungen werden nachfolgenden anhand von in den Zeichnungen dargestellten Ausführungsbeispielen, auf welche Ausführungsbeispiele insgesamt jedoch nicht beschränkt sind, näher beschrieben.

So zeigen die Figuren schematisch die nachfolgenden Ansichten.

Fig. 1 zeigt eine schematische Darstellung einer geschnittenen Seitenansicht eines Wälzlagerkäfigs gemäß einem Ausführungsbeispiel; und

Fig. 2 zeigt ein Flussdiagramm eines Verfahrens zur Herstellung eines Wälzlagerkäfigs oder -segments gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

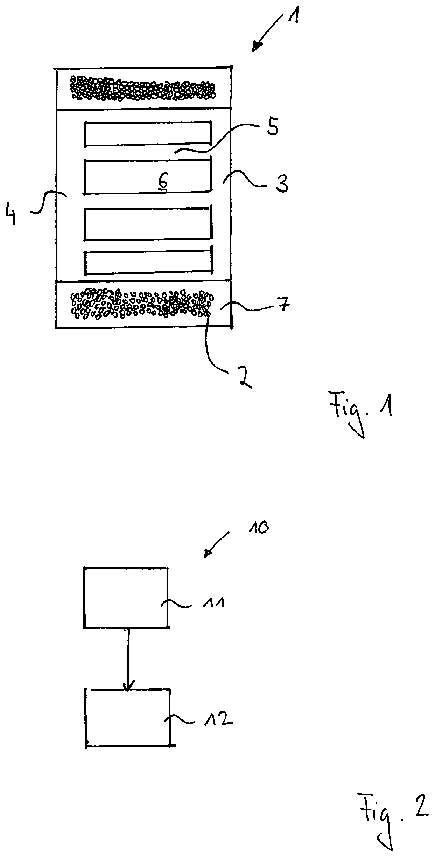

Fig. 1 zeigt eine schematische Darstellung einer geschnittenen Seitenansicht eines Wälzlagerkäfigs gemäß einem Ausführungsbeispiel.

Ein Wälzlagerkäfig 1 besteht zumindest teilweise aus einem Kunststoff. Der Kunststoff weist zumindest abschnittsweise eine Schaumstruktur 2 auf.

Bei dem Ausführungsbeispiel der Fig. 1 weist der Wälzlagerkäfig 1 einen ersten Seitenring 3 und einen zweiten Seitenring 4 auf. Die Seitenringe 3 und 4 sind über eine Mehrzahl von Stegen 5 verbunden. Jeweils zwischen zwei Stegen 5 und den Seitenringen 3 und 4 ist eine Tasche 6 ausgebildet. Die Tasche 6 dient zur Aufnahme eines Wälzkörpers.

Die Schaumstruktur 2 ist in einem Kern des Wälzlagerkäfigs 1 angeordnet. Ein Kern des Bauteils ist dabei ein Bereich des Bauteils, der keine Oberfläche des Bauteils bildet.

Der Kern ist von einem Werkstoff umgeben. Der Wälzlagerkäfig 1 ist nicht vollständig aus der Schaumstruktur 2 ausgebildet. Neben der Schaumstruktur 2 weist der Wälzlagerkäfig auch Bereiche auf, die aus einem massiven Material gebildet sind. Bei der Fig. 1 ist dieser Bereich eine kompakte Außenhaut 7. Die Außenhaut 7 ist, soweit herstellungstechnisch möglich, ohne Poren oder Einschlüsse oder mit einer reduzierten Anzahl von Poren oder Einschlüssen ausgebildet. Mit anderen Worten ausgedrückt weist der Wälzlagerkäfig 1 an seiner Oberfläche eine geschlossene Haut auf. So kann bei manchen Ausführungsbeispielen ermöglicht werden, dass sich kein Schmiermittel oder Verunreinigungen in außen liegenden Poren bzw. der Schaumstruktur 2 verfängt. Zudem ist die kompakte Außenhaut 7 stabiler ausgebildet als die Schaumstruktur 2. Dies kann beispielsweise dann sinnvoll sein, wenn die Außenhaut 7 mit Druck beaufschlagt wird. Unter Umständen kann die Außenhaut 7 durch Wälzkörper beansprucht werden. Die kompakte Außenhaut 7 ist also in Bereichen des Wälzlagerkäfigs 1 angeordnet, in denen dieser größere Kräfte und/oder Spannungen aufnehmen soll.

Mit anderen Worten ausgedrückt betreffen einige Ausführungsbeispiele einen Wälzlagerkäfig 1 aus einem Kunststoff mit einem zelligen Kern als Schaumstruktur 2. Der Wälzlagerkäfig 1 der Fig. 1 kann bei manchen Ausführungsbeispielen auf Biegung belastet werden. Deshalb kann bei manchen Ausführungsbeispielen beispielsweise in dem Kern bzw. der Schaumstruktur nur ein geringer Spannungsanteil auftreten bzw. dieser sogar spannungsneutral sein.

Bei einigen weiteren, nicht dargestellten Ausführungsbeispielen oder Anwendungen kann der Wälzlagerkäfig anderen Belastungen unterliegen. Ggf. kann sich dann eine andere Spannungsverteilung in dem Wälzlagerkäfig ergeben. Beispielsweise können dann Bereiche in denen eine höhere Spannung auftritt, mit einem kompakten Material verstärkt sein. Ergänzend oder alternativ können Bereiche in denen weniger oder keine Spannung auftritt, als Schaumstruktur ausgebildet sein. Beispielsweise kann die Schaumstruktur einen homogenen Aufbau aufweisen. Die Poren können dann ggf. alle ähnlich groß und evtl. gleichmäßig verteilt sein. Ergänzend oder alternativ kann die Schaumstruktur einen inhomogenen Aufbau aufweisen. Beispielsweise können die Poren dann unterschiedliche Größen aufweisen und/oder in unterschiedlicher Anzahl in einer Volumeneinheit auftreten.

Bei einigen weiteren, nicht dargestellten Ausführungsbeispielen kann der Wälzlagerkäfig jcdwcdc andere Form oder ein anderes Design aufweisen. Beispielsweise kann der Wälzlagerkäfig auch aus einer Mehrzahl von Wälzlagerkäfigsegmenten zusammengefügt sein. Die Wälzlagerkäfigsegmente können miteinander verbunden sein. Alternativ können die Wälzlagerkäfigsegmente nicht verbunden, sondern voneinander getrennt, zu einem Wälzlagerkäfig angeordnet sein.

Fig. 2 zeigt ein Flussdiagramm eines Verfahrens zur Herstellung eines Wälzlagerkäfigs oder -segments gemäß einem Ausführungsbeispiel.

Bei einem Verfahren 10 zum Herstellen eines Wälzlagerkäfigs 1 wird in einem Vorgang 11 eine Kunststoffschmelze in eine Form eingebracht. In einem anderen Vorgang 12 wird die Kunststoffschmelze zumindest teilweise geschäumt. Mit dem Verfahren 10 kann auch ein Wälzlagerkäfigsegment hergestellt werden.

Die Vorgänge 11 und 12 des Verfahrens 10 können gemäß manchen Ausführungsbeispielen in jedweder Reihenfolge nacheinander, teilweise überlappend und/oder gleichzeitig ausgeführt werden.

Das Verfahren 10 kann sich gemäß manchen Ausführungsbeispielen zur Herstellung dickwandiger Wälzlagerkäfige 1 eigenen. Der Wälzlagerkäfig 1 weist eine Wanddicke zwischen 4 und 20 mm auf. Das Verfahren kann sich bei manchen Ausführungsbeispielen dafür eignen, besonders steife dickwandige Käfigkonstruktionen mit im Vergleich zur massiven ungeschäumten Ausführung reduziertem Gewicht zu erstellen.

Bei dem Verfahren 10 handelt es sich um ein Spritzgussverfahren. Das Verfahren 10 ist ein Kunststoffspritzgussverfahren. Beispielsweise kann das Verfahren 10 auf einer Spritzgussmaschine durchgeführt werden. Für manche Ausführungsbeispiele des Verfahrens können konventionelle Spritzgießmaschinen eingesetzt werden. Dazu kann ggf. eine entsprechende Modifikation der Spritzgussmaschine vorgenommen werden.

Das Schäumen nach dem Vorgang 12 kann bei manchen Ausführungsbeispielen des Verfahrens 10 chemisch erfolgen. Bei dem Verfahren 10 handelt es sich um ein Thermoplast-SchaumGuss-Verfahren (z.B. TSG). Dabei kann einem Kunststoffgranulat bereits ein chemisches Treibmittel zugesetzt sein. Das Treibmittel kann ggf. einen geringen Gewichtsprozentanteil eines Gewichts des Kunststoffgranulats ausmachen. Als chemisches Treibmittel können beispielsweise Zitronensäurederivate oder Carbonate / Hydrogencarbonate eingesetzt werden. Das Kunststoffgranulat mit dem chemischen Treibmittel kann unter Druck geschmolzen werden. Dazu kann das Kunststoffgranulat ggf. bereits in eine Schnecke der Spritzgussmaschine eingebracht sein. Wenn die Kunststoffschmelze in dem Vorgang 11 in das Werkzeug bzw. eine Kavität des Werkzeugs eingebracht wird, kann der Druck gegenüber dem Zustand in der Schnecke abfallen. Dadurch können sich bei manchen Ausführungsbeispielen in der Schmelze Bläschen, Poren oder Zellen ausbilden. Nach dem Abkühlen des Bauteils können diese als Schaumstruktur 2 vorliegen.

Ergänzend oder alternativ kann das Schäumen in dem Vorgang 12 bei dem Thermoplast-Schaumguss-Verfahren bzw. manchen Ausführungsbeispielen des Verfahrens 10 auch physikalisch erfolgen. Dazu kann der Schmelze beispielsweise ein Treibmittel zu gepumpt werden. Bei dem Treibmittel kann es sich um ein Gas handeln. Beispiele für das Gas können Stickstoff oder Kohlendioxid sein. Das Zupumpen des Treibmittels kann ggf. in einem flüssigen Zustand der Schmelze erfolgen. Die Schmelze kann sich dazu in einem Zylinder einer Spritzgussmaschine befinden. Beispielsweise kann in dem Zylinder ein höherer Druck als in dem Werkzeug der Spritzgussmaschine herrschen. Wenn dann die Schmelze aus dem Zylinder in dem Vorgang 11 in das Werkzeug eingebracht wird, fällt der Druck in der Schmelze gegenüber einem Zylinderdruck ab. Dadurch kann es bei manchen Ausführungsbeispielen zum Schäumen bzw. Bläschen- oder Zellbildung in der Schmelze kommen. Auch bei einem physikalischen Schäumen in dem Vorgang 12 können die entstehenden Formteile bzw. Wälzlagerkäfige 1 bei manchen Ausführungsbeispielen in ihrem Kern eine Schaumstruktur 2 und zur Oberfläche hin eine kompakte Außenhaut 7 aufweisen.

Zusammenfassend kann bei manchen Ausführungsbeispielen das Treibmittel vor dem Einbringen der Schmelze in das Werkzeug zugemischt werden. Das Schäumen der Schmelze kann dann beispielsweise beim Einbringen der Schmelze in das Werkzeug erfolgen. Mit anderen Worten ausgedrückt betreffen Ausführungsbeispiele Wälzlagerkäfige, die mit einem Schaumguss-Spritzguss-Verfahren hergestellt worden sind.

Bei einigen weiteren Ausführungsbeispielen kann der entstehende Wälzlagerkäfig 1 bzw. das Formteil bei anderen oder anschließenden Bearbeitungsvorgängen weiter verarbeitet werden. Beispielsweise kann der Wälzlagerkäfig 1 oder das Formteil beschichtet werden.

Bei einigen weiteren Ausführungsbeispielen des Verfahrens 10 wird der thermoplastischen Kunststoffschmelze zum Schäumen in dem Vorgang 12 ein Gas zugeführt. Bei dem Gas kann es sich um ein inertes Gas handeln. Beispiele für das Gas können Stickstoff oder Kohlendioxid sein. Beispielsweise können die Kunststoffschmelze und das Gas in einem Schmelzzylinder der Spritzgussmaschine zu einer Einphasenlösung gemischt werden. Wenn die Kunststoffschmelze bzw. die Einphasenlösung in dem Vorgang 11 in eine Form bzw. eine Kavität des Spritzgusswerkzeugs eingebracht wird, erfährt die Einphasenlösung bzw. das Gemisch einen Druckabfall. Dies kann bei manchen Ausführungsbeispielen dazu führen, dass das Gas in einem Bauteilkern nukleiert. Dabei könnte ggf. eine Vielzahl (z.B. Millionen) von kleinsten Zellen wachsen und definiertes Volumen ersetzen bzw. verdrängen und so die Schaumstruktur 2 bilden. Dies kann zu einer Dichtereduzierung des Wälzlagerkäfigs 1 führen. Auch bei diesem Ausführungsbeispiel des Verfahrens 10 kann sich die Schaumstruktur 2 auch nur abschnittsweise in einem Kern ausbilden. Beispielsweise kann die Schaumstruktur 2 von einer kompakten Außenhaut 7 umgeben sein. Ergänzend oder alternativ kann auch eine Oberfläche des Wälzlagerkäfigs 1 als Schaumstruktur 2 ausgebildet sein.

Dadurch, dass der Wälzlagerkäfig 1 eine Dichtereduzierung erfährt, kann beispielsweise ein Materialverbrauch bzw. -einsatz reduziert sein. Dies kann sich insbesondere bei teuren Kunststoffen (z.B. PEEK, PolyEtherEtherKeton) günstig auf Herstellungskosten des Wälzlagerkäfigs 1 auswirken.

Ferner kann bei manchen Ausführungsbeispielen des Verfahrens 10 ein Einspritzdruck und/oder eine Maschinenzuhaltekraft gegenüber anderen Spritzgussverfahren reduziert sein. Beispielsweise könnte eine Reduzierung jeweils in einem Bereich zwischen 20% und 60% gegenüber konventionellen Spritzgussverfahren liegen. Durch diese beiden Effekte kann sich bei manchen Ausführungsbeispielen des Verfahrens 10 eine Energie- und/oder Kosteneinsparung ergeben. Ergänzend oder alternativ kann das Verfahren auch mit einem reduzierten Schneckendurchmesser durchgeführt werden. Dadurch kann das Verfahren 10 auf kleineren und einfacher aufgebauten Spritzgießmaschinen durchgeführt werden. So könnte beispielsweise ein Platzbedarf zur Durchführung des Verfahrens 10 ebenfalls reduziert sein.

Bei dem Verfahren gemäß manchen Ausführungsbeispielen kann ein erforderlicher Nachdruck erheblich niedriger sein als bei einem konventionellen Spritzgussverfahren bzw. wenn massive oder dickwandige Wälzlagerkäfige hergestellt werden. Bei manchen Ausführungsbeispielen kann ein Nachdruck sogar entfallen. Dies könnte beispielsweise möglich sein, weil die Konturbildung in der Werkzeughöhlung durch Expansion des Treibmittels erfolgen kann.

Zusammenfassend kann bei der Herstellung des Wälzlagerkäfigs oder -segments bei manchen Ausführungsbeispielen eine 20% bis 50% kürzere Zykluszeit des Spritzgussverfahrens als bei herkömmlichen Verfahren und so ggf. auch eine Kosteneinsparung erreicht werden. Bei den im Folgenden genannten Werten handelt es sich um Vergleichswerte zur Herstellung vollständig massiver Wälzlagerkäfige. Ein Materialverbrauch, beispielsweise an Kunststoffgranulat, könnte um einen Wert zwischen 5% und 50% reduziert werden. Darüber hinaus könnte ein geringerer Bauteilverzug auftreten. Dieser könnte beispielsweise um einen Wert zwischen 15% und 60% reduziert sein und die Qualität des Wälzlagerkäfigs könnte erhöht werden. Bei manchen Ausführungsbeispielen des Verfahrens kann so ggf. weniger Ausschuss produziert werden. Analog könnte das Auftreten von Einfallstellen in dem Wälzlagerkäfig zwischen 10% und 80% reduziert werden.

Zusammenfassend betreffen Ausführungsbeispiele die Herstellung von Kunststoffkäfigen. Diese weisen einen zelligen Kern auf. Zur Herstellung kann z.B. ein Thermoplast-Schaumguss-Verfahren oder ein anderes Verfahren nach zumindest einem der oben beschriebenen Ausführungsbeispiele eingesetzt werden. Die Kunststoffkäfige können sich für Wälzlager jedweder Art eignen. Durch die Anwendung dieser Herstellungsverfahren können bei manchen Ausführungsbeispielen auch dickwandige Kunststoffkäfige preiswert und mit einer hohen Qualität hergestellt werden.

### Bezugszeichenliste

- 1: Wälzlagerkäfig
- 2: Schaumstruktur
- 3: Seitenring
- 4: Seitenring
- 5: Steg
- 6: Tasche
- 7: Außenhaut
- 10: Verfahren
- 11: Einbringen
- 12: Schäumen

## Patentansprüche

1. Wälzlagerkäfig (1) oder -segment, das zumindest teilweise aus einem Kunststoff besteht, wobei der Kunststoff zumindest abschnittsweise eine Schaumstruktur (2) aufweist,
wobei der Wälzlagerkäfig (1) oder das -segment mit einem Spritzgussverfahren hergestellt ist;
wobei der Kunststoff ein Thermoplast ist;
wobei die Schaumstruktur (2) einen Kern des Wälzlagerkäfigs (1) oder des - segments ausbildet, der von einer kompakten Außenhaut (7) umgeben ist;
wobei die Außenhaut (7) eine Massivstruktur aufweist, die als Skelet des Wälzlagerkäfigs dient, **dadurch gekennzeichnet, dass**
der Wälzlagerkäfig (1) oder das - segment eine Wandstärke zwischen 4 mm und 20 mm aufweist; und
der Kern ein Bereich des Wälzlagerkäfigs (1) ist, der keine Oberfläche des Wälzlagerkäfigs (1) bildet.

2. Wälzlagerkäfig (1) oder -segment nach Anspruch 1, wobei ein Volumen des Kunststoffs zwischen 50% und 95% eines Gesamtvolumens des Wälzlagerkäfigs (1) oder des -segments entspricht.

3. Wälzlagerkäfig (1) oder -segment nach einem der vorhergehenden Ansprüche, wobei der Kunststoff zumindest einen Füllstoff umfasst.

4. Wälzlagerkäfig (1) oder -segment nach Anspruch 1, wobei sich eine Verteilung von Schaumstruktur (2) und kompakter Außenhaut (7) bedingt durch ein Herstellungsverfahren automatisch ergibt.

5. Wälzlagerkäfig (1) oder -segment nach einem der vorhergehenden Ansprüche, wobei die Schaumstruktur (2) Poren mit einem Durchmesser zwischen 0,1 mm und 1,0 mm aufweist.

6. Wälzlagerkäfig (1) oder -segment nach einem der vorhergehenden Ansprüche, wobei die Schaumstruktur (2) Poren umfasst, wobei ein Hohlraum der Poren mit einem Gas gefüllt ist.

7. Wälzlagerkäfig (1) nach einem der vorhergehenden Ansprüche, der einstückig oder mehrstückig aus einer Mehrzahl von Wälzlagerkäfigsegmenten gebildet ist.

8. Spritzgussverfahren (10) zum Herstellen eines Wälzlagerkäfigs (1) oder -segments, nach einem der vorhergehenden Ansprüche umfassend:
Einbringen (11) einer Kunststoffschmelze in eine Form; und
zumindest teilweises Schäumen (12) der Kunststoffschmelze.

9. Verfahren (10) nach Anspruch 8, wobei das Schäumen (12) chemisch mit einem Treibmittel erfolgt.

10. Verfahren (10) nach Anspruch 8, wobei das Schäumen (12) physikalisch mit einem Gas erfolgt, das der Kunststoffschmelze unter Druck zugemischt wird.

## Claims

1. Roller bearing cage (1) or roller bearing cage segment, which consists at least partially of a plastic, wherein the plastic has a foam structure (2) at least in certain portions,
wherein the roller bearing cage (1) or the roller bearing cage segment is produced by an injection moulding process;
wherein the plastic is a thermoplastic;
wherein the foam structure (2) forms a core of the roller bearing cage (1) or the roller bearing cage segment, which core is surrounded by a compact outer skin (7);
wherein the outer skin (7) has a solid structure, which serves as a skeleton of the roller bearing cage, **characterized in that**
the roller bearing cage (1) or the roller bearing cage segment has a wall thickness of between 4 mm and 20 mm; and
the core is a region of the roller bearing cage (1) that does not form a surface of the roller bearing cage (1).

2. Roller bearing cage (1) or roller bearing cage segment according to Claim 1, wherein a volume of the plastic corresponds to between 50% and 95% of a total volume of the roller bearing cage (1) or the roller bearing cage segment.

3. Roller bearing cage (1) or roller bearing cage segment according to either of the preceding claims, wherein the plastic comprises at least one filler.

4. Roller bearing cage (1) or roller bearing cage segment according to Claim 1, wherein a distribution of foam structure (2) and compact outer skin (7) as a result of a production process is effected automatically.

5. Roller bearing cage (1) or roller bearing cage segment according to one of the proceeding claims, wherein the foam structure (2) has pores with a diameter of between 0.1 mm and 1.0 mm.

6. Roller bearing cage (1) or roller bearing cage segment according to one of the preceding claims, wherein the foam structure (2) comprises pores, wherein a cavity of the pores is filled with a gas.

7. Roller bearing cage (1) according to one of the preceding claims, which is formed in one piece or multiple pieces from a plurality of roller bearing cage segments.

8. Injection moulding process (10) for producing a roller bearing cage (1) or roller bearing cage segment according to one of the preceding claims, said process comprising:
introducing (11) a plastics melt into a mould; and at least partially foaming (12) the plastics melt.

9. Process (10) according to Claim 8, wherein the foaming (12) is effected chemically with a foaming agent.

10. Process (10) according to Claim 8, wherein the foaming (12) is effected physically with a gas, which is admixed with the plastics melt under the action of pressure.

## Revendications

1. Cage de palier à roulement (1) ou segment de celle-ci, qui est au moins partiellement constitué (e) d'une matière plastique, la matière plastique comprenant au moins en sections une structure en mousse (2),
la cage de palier à roulement (1) ou le segment de celle-ci étant fabriqué(e) avec un procédé de moulage par injection ;
la matière plastique étant un thermoplastique ;
la structure en mousse (2) formant un noyau de la cage de palier à roulement (1) ou du segment de celle-ci, qui est entouré par une peau extérieure compacte (7) ; la peau extérieure (7) présentant une structure massive, qui sert de squelette de la cage de palier à roulement, caractérisé(e) en ce que
la cage de palier à roulement (1) ou le segment de celle-ci présente une épaisseur de paroi comprise entre 4 mm et 20 mm ; et
le noyau est une zone de la cage de palier à roulement (1) qui ne forme pas une surface de la cage de palier à roulement (1).

2. Cage de palier à roulement (1) ou segment de celle-ci selon la revendication 1, dans laquelle ou dans lequel un volume de la matière plastique correspond à entre 50 % et 95 % d'un volume total de la cage de palier à roulement (1) ou du segment de celle-ci.

3. Cage de palier à roulement (1) ou segment de celle-ci selon l'une quelconque des revendications précédentes, dans laquelle ou dans lequel la matière plastique comprend au moins une charge.

4. Cage de palier à roulement (1) ou segment de celle-ci selon la revendication 1, dans laquelle ou dans lequel une répartition de la structure en mousse (2) et de la peau extérieure compacte (7) résulte automatiquement d'un procédé de fabrication.

5. Cage de palier à roulement (1) ou segment de celle-ci selon l'une quelconque des revendications précédentes, dans laquelle ou dans lequel la structure en mousse (2) présente des pores ayant un diamètre compris entre 0,1 mm et 1,0 mm.

6. Cage de palier à roulement (1) ou segment de celle-ci selon l'une quelconque des revendications précédentes, dans laquelle ou dans lequel la structure en mousse (2) comprend des pores, une cavité des pores étant remplie avec un gaz.

7. Cage de palier à roulement (1) selon l'une quelconque des revendications précédentes, qui est formée en une seule pièce ou en plusieurs pièces à partir d'une pluralité de segments de cage de palier à roulement.

8. Procédé de moulage par injection (10) pour la fabrication d'une cage de palier à roulement (1) ou d'un segment de celle-ci, selon l'une quelconque des revendications précédentes, comprenant :
l'introduction (11) d'une masse fondue de matière plastique dans un moule ; et
le moussage au moins partiel (12) de la masse fondue de matière plastique.

9. Procédé (10) selon la revendication 8, dans lequel le moussage (12) a lieu chimiquement avec un agent gonflant.

10. Procédé (10) selon la revendication 8, dans lequel le moussage (12) a lieu physiquement avec un gaz, qui est incorporé dans la masse fondue de matière plastique sous pression.
